# EUROPÄISCHE PATENTSCHRIFT

(11) **EP 2 670 896 B1**
(45) Veröffentlichungstag und Bekanntmachung des Hinweises auf die Patenterteilung: **08.11.2017**
(21) Anmeldenummer: 12708661.9
(22) Anmeldetag: 26.01.2012
(51) Int. Cl.: D01C 1/02, D01B 1/48, C08J 5/04

(54) **VERFAHREN ZUR BEREITSTELLUNG UND AUFBEREITUNG VON NATURFASERN**
PROCESS FOR PROVIDING AND PROCESSING NATURAL FIBRES
PROCÉDÉ D'OBTENTION ET DE PRÉPARATION DE FIBRES NATURELLES

(30) Priorität: 02.02.2011 DE 102011010140
(43) Veröffentlichungstag der Anmeldung: 11.12.2013
(73) Patentinhaber: Biowert AG, 5001 Aarau (CH)
(72) Erfinder: GASS, Michael, Ludwig, CH-4600 Olten (CH)
(74) Vertreter: Reiser & Partner Patentanwälte mbB
(86) Internationale Anmeldenummer: PCT/EP2012/000347
(87) Internationale Veröffentlichungsnummer: WO 2012/104039

(56) Entgegenhaltungen:
- WO-A1-2008/116340
- WO-A1-2009/003606
- WO-A1-2011/047804
- KR-A- 20080 056 125

## Beschreibung

Die Erfindung betrifft ein Verfahren zur Herstellung und Aufbereitung von Naturfasern.

Aus dem Stand der Technik ist es bekannt, einem Kunststoff wie Polyethylen Naturfasern wie Hanf-, Flachs- oder auch Holzfasern beizumischen. Derartige Naturfasern weisen den Vorteil der vollständigen biologischen Abbaubarkeit und des geringen spezifischen Gewichts auf. Bislang war jedoch nachteilig, dass ein mit Naturfasern versehenes Kunststoffmaterial gegenüber einem reinem Kunststoffmaterial oder gar einem mit Glasfasern verstärkten Kunststoff verschlechterte mechanische Eigenschaften aufwies. Daher wurden Naturfasern bislang vorwiegend als Füllstoff betrachtet, lediglich eingesetzt, um den Anteil des nicht-organischen Materials zu reduzieren. Darüber hinaus war der Einsatzbereich aufgrund der schlechten mechanischen Eigenschaften derartiger Compounds begrenzt. Ein Haupteinsatzgebiet der herkömmlichen mit Naturfasern versehenen Kunststoffmaterialien liegt im Automobilbau wo beispielsweise Verkleidungen im Innenbereich eines Kraftfahrzeugs aus derartigen Materialien hergestellt werden.

WO 2008/116340 A1 zeigt ein Verfahren zur Bereitstellung und Aufbereitung von Naturfasern, bei welchem zunächst aus Naturfasern und Wasser eine Suspension hergestellt wird, anschließend Naturfasern aus der Biomasse herausgelöst werden und die Flüssigkeit aus der Suspension abgetrennt wird, wobei die Suspension mittels einer Schneckenpresse mechanisch entwässert wird.

WO 2009/003606 A1 befasst sich mit einem Verfahren zur Herstellung von Fasermaterial, bei dem ein Naturfasermaterial alkalisch aufgeschlossen wird, wobei das Naturfasermaterial in einem Siebbandtrockner getrocknet wird.

WO 2011/047804 A1 beschreibt ein Verfahren zur Bereitstellung und Aufbereitung von Naturfasern, bei welchem aus Naturfasern und Wasser eine Suspension hergestellt wird, die Naturfasern aus der Biomasse herausgelöst werden und anschließend die Flüssigkeit aus der Suspension abgetrennt wird und die Naturfasern getrocknet werden.

Grundsätzlich können verschiedene Formen von Naturfasern unterschieden werden:
- Holzfasern bestehen aus langgestreckten Holzzellen, wobei Holzfasern je nach Holzsorte etwa ein Fünftel Lignin und vier Fünfteln Zellulose enthalten.
- Bastfasern bestehen aus mehrzelligen Faserbündeln. Es sind lang gezogene und dickwandige Zellen, die unverholzt sind. Der Hauptbestandteil von Bastfasern sind im Wesentlichen unterschiedlich dicke Schichten von lang gestreckten Zellulosefibrillen, die von Hemi-Zellulose umschlossen sind. Typische Naturfasern auf der Basis von Bastfasern sind beispielsweise Hanffasern
- Naturfasern aus Grünschnitt, insbesondere aus Grasschnitt oder Roggenschnitt bestehen vorwiegend aus Hartfasern, welche im Wesentlichen ebenfalls auf Zellulose basieren. Hartfasern weisen meist eine höhere Härte auf als Bastfasern, jedoch sind die Hartfasern empfindlicher gegenüber Biegebeanspruchung.

Der Erfindung liegt die Aufgabe zugrunde, ein Verfahren zur Herstellung von Naturfasern anzugeben, welche die Herstellung von mechanisch belastbaren und haltbaren Naturfasern ermöglicht.

Diese Aufgabe wird mit den Merkmalen von Anspruch 1 gelöst. Auf vorteilhaften Ausgestaltungen nehmen die Unteransprüche Bezug.

Das erfindungsgemäße Verfahren zur Bereitstellung und Aufbereitung von Naturfasern umfasst folgende Schritte:
1) Bereitstellen einer Naturfasern enthaltenden Biomasse mit einer Trockensubstanz von höchstens 50 Gew.%;
2) Zugeben von Wasser zum Herstellen einer die Biomasse enthaltenden Suspension;
3) Herauslösen der Naturfasern aus der Biomasse;
4) Abtrennen der Flüssigkeit aus der Suspension;
5) Trocknen der Naturfasern,
wobei die Trocknung der Naturfasern eine Vortrocknung und eine Endtrocknung umfasst, dadurch gekennzeichnet, dass die Vortrocknung eine Trocknung in einem Bandtrockner umfasst und dass nur ein Teil der getrockneten Naturfasern aus dem Bandtrockner entnommen wird, während der übrige Teil dem Bandtrockner wieder zugeführt wird. In Schritt 1 wird eine Naturfasern enthaltende Biomasse bereitgestellt. Hierbei kann es sich um Naturfasern enthaltende Pflanzenteile von verschiedenen Pflanzen handeln. Besonders geeignet für das beschriebene Verfahren sind Pflanzenteile, welche nicht verholzt sind und daher nur geringe Mengen oder kein Lignin enthalten. Vorteilhaft sind weiterhin Pflanzenteile, die in nur geringem Maß oder gar nicht verhornt sind. Eine Verhornung wird bei Pflanzenfasern in der Regel durch eine Trocknung ausgelöst. Dabei bilden sich aufgrund des Wasserentzugs zwischen den Zellulosemolekülen kovalente Bindungen aus, wodurch die Pflanzenfasern verspröden und die Bruchneigung zunimmt. Daher wird vorgeschlagen, solche Pflanzenteile zu verwenden, die nicht getrocknet wurden.
Für das erfindungsgemäße Verfahren eignen sich einerseits frisch geschnittenes Gras und andererseits siliertes Gras besonders. Auf diese Weise werden als Ausgangsmaterial Faserqualitäten bereitgestellt, deren Trockensubstanzgehalte zwischen 25 und 40 Gew.% liegen. Trockensubstanzgehalt bezeichnet dabei den Gehalt an trockener Substanz, der zurückbleibt, wenn sämtliches Wasser entfernt wird. Ein Gehalt an Trockensubstanz von 25 bis 40 Gew.% entspricht daher im Umkehrschluss einem Wassergehalt zwischen 75 und 60 Gew.%. Die Silierung hat darüber hinaus den Vorteil, dass das nur zu bestimmten Jahreszeiten zur Verfügung stehende Gras über das ganze Jahr ohne Qualitätsverlust verarbeitet werden kann. Ein weiterer geeigneter Stoff ist Roggengrünschnitt, wobei auch je nach Region verfügbare andere nachwachsende faserhaltige Rohstoffe eingesetzt werden können. Generell wird als Rohstoff eine faserhaltige Biomasse mit geringem Ligningehalt, insbesondere einem Ligningehalt von weniger als 5 Gew.%, vorgeschlagen. Vor diesem Hintergrund sind weitere denkbare Rohstoffe Bargasse, insbesondere silierter Zuckerrohrabfall und Treber, insbesondere spelzenhaltiger Biertreber vorteilhaft.

In Schritt 2 wird durch Zugabe von Wasser eine die Biomasse enthaltene Suspension hergestellt. Dazu wird die Biomasse beispielsweise in einen Mischtank gegeben, Wasser hinzugegeben und mittels einem in dem Mischtank angeordneten Rührwerk in Suspension gebracht. Diese Suspension erleichtert die weitere Behandlung der Biomasse. Bei dem erfindungsgemäßen Verfahren erfolgt die Herstellung der Suspension ausschließlich mit Wasser, dieses bildet in den nachfolgenden Schritten auch das Lösungsmittel, welches die löslichen Bestandteile der Biomasse aufnimmt. In diesem Schritt erfolgt auch eine erste Reinigung der Biomasse, wobei an der Biomasse anhaftende Verunreinigungen und unerwünschte Begleitstoffe in dem Wasser gelöst werden. In diesem Zusammenhang ist insbesondere vorteilhaft, dass das Freisetzen der Naturfasern aus der Biomasse ohne Einsatz möglicherweise umweltgefährdender Chemikalien erfolgt. Lösungsmittel ist ausschließlich Wasser.

In Schritt 3 werden die Naturfasern aus der Biomasse herausgelöst. Zum Herauslösen wird vorzugsweise ein Mazerator eingesetzt, welcher die dem Mazerator zugeführte suspendierte Biomasse in einzelne Bestandteile auftrennt und aufgrund der erzeugten Friktion die mit Zellflüssigkeit gefüllten Zellen öffnet und den Zellsaft austreten lässt. Dazu weist ein Mazerator ein rotierendes Schneidmesser auf, welches mit oder ohne Berührung an einem Gegenmesser entlang streift. Das Gegenmesser kann auch als Sieb ausgebildet sein. Das Ergebnis der Mazeration ist eine Suspension, in der die in der Biomasse enthaltenen Naturfasern vereinzelt sind und die in der Biomasse enthaltenen flüssigen Bestandteile in der wässrigen Suspension in Lösung gehen.

Die vereinzelten Naturfasern bestehen im Wesentlichen aus Alpha-Zellulose und Hemi-Zellulose, wobei das Verhältnis zwischen diesen beiden Zellulosearten von dem Schnittzeitpunkt der Biomasse abhängig ist. Zur Verwendung der Naturfasern als Verstärkungsfaser in einem Kunststoff-Compound sind beide Zellulosearten relevant: die Alpha-Zellulose ermöglicht eine hohe mechanische Stabilität der Fasern und die Hemi-Zellulose ermöglicht eine gleichmäßige Aufnahme des Ausrüstungsmittels, beispielsweise des Haftvermittlers oder des Flammschutzmittels. Ferner verbessert Hemi-Zellulose die Verarbeitbarkeit des Kunststoff-Compounds, insbesondere dessen Fließfähigkeit bei einer thermoplastischen Verarbeitung. Bevorzugte Mengenanteile von Alpha-Zellulose und Hemi-Zellulose betragen, jeweils bezogen auf die Gesamtmasse 20 bis 30 Gew.% Alpha-Zellulose und 15 bis 25 Gew.% Hemi-Zellulose, besonders bevorzugt enthält die faserhaltige Biomasse 25 Gew.% Alpha-Zellulose und 15 Gew.% Hemi-Zellulose. Insgesamt soll der Mengenanteil der Alpha-Zellulose größer sein als der Mengenanteil der Hemi-Zellulose.

In Schritt 4 erfolgt eine Abtrennung der Flüssigkeit aus der Suspension. Dazu wird die Suspension einer Presse, vorzugsweise einer Schneckenpresse zugeführt. In der Presse erfolgt eine Abtrennung der Flüssigkeit mit den in der Flüssigkeit gelösten Bestandteilen wie Zellwasser, Kohlenhydraten, Proteinen und Verunreinigungen von dem in der Biomasse enthaltenen Feststoff, wobei der Feststoff insbesondere die Naturfasern beinhaltet.

In Schritt 5 erfolgt eine Trocknung der Naturfasern. Bei dem erfindungsgemäßen Verfahren ist dies die erste Trocknung der Naturfasern, welche bis zu diesem Zeitpunkt stets feucht gehalten wurden. Die Trocknung wird hinsichtlich der Trocknungstemperatur und der Trocknungsdauer dabei derart ausgeführt, dass die Naturfasern nicht beschädigt werden und eine Verhornung weitgehend verhindert wird. Ferner erfolgt die Trocknung derart, dass eine ausreichende Menge an Restfeuchte in den Naturfasern enthalten bleibt, so dass auch nach Abschluss der Trocknung keine Verhornung der Naturfasern erfolgt. In diesem Zusammenhang ist ein Gehalt an Trockensubstanz nach Abschluss der Trocknung von 88 bis 92 Gew.%, höchstens von 95 Gew.% besonders vorteilhaft. Diese Werte entsprechen anders ausgedrückt einer Restfeuchte von 5 Gew.% bzw. von 10 bis 6 Gew.% entspricht. Dadurch behalten die Naturfasern ihre Geschmeidigkeit bei weitgehender Vermeidung der Verhornung der Naturfasern, was sich positiv auf die mechanische Stabilität bei der späteren Verwendung der Fasern, beispielsweise als Faserverstärkung in einem Kunststoffmaterial oder als Dämmmaterial auswirkt.

Erfindungsgemäß umfasst die Trocknung in eine Vortrocknung und eine Endtrocknung, wobei ein besonders vorteilhaftes Trocknungsverfahren eine zweistufige Trocknung umfasst. Die mehrstufige Trocknung ermöglicht eine schonende und energieeffiziente Trocknung der Naturfasern unter weitgehender Vermeidung der Verhornung.

In einer ersten Stufe, der Vortrocknung erfolgt dabei erfindungsgemäß eine Trocknung in einem Bandtrockner. Der Vorteil einer Trocknung in einem Bandtrockner liegt in dem verhältnismäßig geringen Energiebedarf für die Trocknung. Eine vorteilhafte Trocknung der ersten Stufe erfolgt bei Warmlufttemperaturen von 60 bis 80°C und einer Verweilzeit der Naturfasern in dem Bandtrockner von 20 bis 35 Minuten. Die Temperatur ist dabei so gewählt, dass eine Verhornung der Naturfasern weitgehend verhindert ist. Ferner wird eine zu starke lokale Trocknung der den Bandtrockner berührenden Fasern verhindert. Zum Trocken in einem Bandtrockner wird das zu trocknende Gut, hier die Naturfasern, auf ein Förderband gegeben und trockene warme Luft wird durch die Naturfasern und das Förderband geleitet. Dabei nimmt die Luft Feuchtigkeit aus den Naturfasern auf, wobei der Trocknungsgrad der dem Luftstrom zugewandten Fasern am größten ist und somit eine graduelle Trocknung der Naturfasern erfolgt. Damit die Naturfasern dennoch eine gleichmäßige Restfeuchte aufweisen, ist der Bandtrockner so ausgestaltet, dass nur ein Teil der getrockneten Naturfasern entnommen wird, während der übrige Teil dem Bandtrockner für eine wiederholte Trocknung wieder zugeführt wird. Bevorzugt wird der Teil der Naturfasern zurückgeführt, der während der Trocknung dem Luftstrom abgewandt war und dadurch die größte Restfeuchte aufweist. Dementsprechend wird lediglich der Teil der Naturfasern entnommen, der eine gleichmäßig geringe Restfeuchte aufweist.

Die Trocknungsparameter während der Trocknung in der ersten Stufe sind dabei so eingestellt, dass die Naturfasern nach der ersten Trocknung eine Restfeuchte vorzugsweise von 20 bis 40 Gew.%, höchstens von 50 Gew.% aufweisen. Dadurch ist sichergestellt, dass trotz gradueller Trocknung in dem Bandtrockner keine Verhornung der Naturfasern erfolgt.

Vorzugsweise werden die Naturfasern in einer zweiten Stufe, der Endtrocknung in einem Luftstrom getrocknet. Dazu werden die Naturfasern in einen Luftstrom aus erhitzter Luft gegeben und im Gleichstrom mit der erhitzten Luft geführt, wobei die Naturfasern Feuchtigkeit an die im Gleichstrom geführte Luft abgeben. Nach erfolgter Trocknung werden die Naturfasern von der Luft abgetrennt, dies kann beispielsweise durch einen Zyklon erfolgen.

Eine vorteilhafte Vorrichtung zur Trocknung im Luftstrom wird durch einen Flugschichttrockner gebildet. Flugschichttrockner sind derart ausgebildet, dass die Strömungsgeschwindigkeit des erhitzten Luftstroms und die Trocknungstemperaturen höher sind als bei der Trocknung beispielsweise in Wirbelschichttrocknern. Dadurch werden die Naturfasern in dem Luftstrom mitgerissen und in kurzer Zeit getrocknet. Die Lufttemperatur des erhitzten Luftstroms beträgt vorzugsweise zwischen 75°C und 110°C und die Verweilzeit der Naturfasern in der Vorrichtung beträgt vorzugsweise zwischen 0,5 s und 3 s erfolgen. Dazu wird der Luftstrom mittels eines Gebläses auf eine Geschwindigkeit von 1 m/ s bis 6 m/ s beschleunigt.

Die Trocknungsparameter während der Trocknung in der zweiten Stufe sind dabei so eingestellt, dass die Naturfasern nach der zweiten Trocknung einen Gehalt an Trockensubstanz vorzugsweise von 88 bis 92 Gew.%, höchstens jedoch von 95 Gew.% aufweisen. Aufgrund der sehr kurzen Verweilzweit in dem Flugschichttrockner weisen die Naturfasern auch nach der zweiten Trocknung trotz der nur noch geringen Restfeuchte nur eine sehr geringe Verhornung auf.

Bei der Trocknung im Luftstrom ist vorteilhaft, dass die Naturfasern in dem Luftstrom voneinander getrennt werden. Ferner bauschen die Naturfasern nach der zweiten Trocknung stark auf. Dabei hat sich überraschenderweise herausgestellt, dass die Bauschigkeit der Naturfasern besonders groß ist, wenn die Restfeuchte der Naturfasern nach Abschluss der ersten Trocknung ausreichend groß ist und mindestens 30 Gew.% beträgt. Die Bauschigkeit ist für eine Vielzahl von Anwendungen von großem Vorteil. Bei einer Verwendung der Naturfasern in Dämmstoffen und insbesondere als Einblasdämmstoff ergibt sich aufgrund der in der Fasermatrix eingeschlossenen Luft ein verbesserter Dämmwert. Bei der Verwendung der erfindungsgemäß hergestellten Naturfasern als Faserverstärkung in einem Kunststoffmaterial verbessert sich einerseits aufgrund der verbesserten Verteilung der Naturfasern in der Kunststoffmatrix die Festigkeit des Kunststoffmaterials, und andererseits verbessert sich die Herstellbarkeit eines thermoplastischen faserverstärkten Kunststoffmaterials, weil sich der als Granulat vorliegende Kunststoff beim Mischen mit den Naturfasern sehr gut in der Fasermatrix verteilt und anschließend keine Entmischung erfolgt.

Die Bauschigkeit kann durch ein Schüttgewicht, bzw. durch Bestimmung der Rohdichte quantifiziert werden. Zur Bestimmung der Bauschigkeit werden Naturfasern in einen oben offenen, formstabilen Behälter mit den lichten Maßen 1 m × 1 m × 0,25 m eingeblasen oder manuell eingefüllt und an der Oberkante des Behälters bündig abgestrichen, anschließend wird die Masse der in den Behälter eingefüllten Naturfasern gewogen. Aus der Masse und dem Volumen (0,25 m³) wird die Bauschigkeit berechnet. Dabei sind Einzelergebnisse und ein Mittelwert aus drei Versuchen anzugeben. Eine erfindungsgemäße Bauschigkeit der Naturfasern beträgt zwischen 35 kg/m³ und 60 kg/m³, vorzugsweise zwischen 35 und 45 kg/m³.

Um während des gesamten Verfahrens zur Bereitstellung und Aufbereitung der Naturfasern eine Verhornung der Naturfasern zu verhindern, erfolgt die Ausgestaltung des Verfahrens vorzugsweise so, dass die Naturfasern stets eine ausreichende Restfeuchte aufweisen. Besonders vorteilhaft im Sinne der Vermeidung einer Verhornung ist es, wenn die Naturfasern bis zum Trocknen einen Gehalt an Trockensubstanz von 90 Gew.% nicht überschreiten, insbesondere einen Gehalt an Trockensubstanz von 60 Gew.% nicht überschreiten.

Die zuvor beschriebenen Schritte 2) bis 4) können wenigstens einmal wiederholt werden, wobei die Schritte 2) bis 4) bevorzugt zweimal wiederholt werden. Dabei wird zur Herstellung der Suspension jeweils aufgereinigtes Wasser verwendet. Durch die Wiederholung der Schritte 2 bis 4, welche auch als Aufreinigungsprozess bezeichnet werden können, ergibt sich eine besonders hohe Reinheit der Naturfasern. Diese hohe Reinheit der Naturfasern ist gekennzeichnet durch einen besonders geringen Gehalt der Naturfasern an Kohlenhydraten und Proteinen. Bei Versuchen hat sich gezeigt, dass an den Naturfasern anhaftende oder mit den Naturfasern fest verbundene Verunreinigungen, die insbesondere aus Kohlenhydraten und Proteinen gebildet werden, die Fixierbarkeit eines Mittels zum Ausrüsten an den Naturfasern verschlechtern. Insgesamt hat sich gezeigt, dass die Fixierbarkeit der Ausrüstungsmittel umso besser, je größer der Reinheitsgrad der aus Zellulose-Verbindungen bestehenden Naturfaser ist. Ferner sind Naturfasern mit einer hohen Reinheit besonders haltbar, was insbesondere bei der Verwendung der Naturfasern als Dämmstoff von Vorteil ist.

Bei der letztmaligen Wiederholung der Schritte 2) bis 4) kann die Suspension wenigstens ein Mittel zum Ausrüsten der Naturfasern enthalten. Durch das Mittel zum Ausrüsten wird die Naturfaser zu einer funktionalen Naturfaser ausgerüstet, welche je nach Anforderung und Einsatzzweck besondere technische Eigenschaften aufweist.

Zur besseren Verbindbarkeit mit Kunststoffen, insbesondere thermoplastischen Kunststoffen kann das Mittel einen Haftvermittler umfassen. Dieser kann ein carboxyliertes Polypropylen umfassen, wobei zur Carboxylierung insbesondere Maleinsäureanhydrid verwendet wird. Derartige Haftvermittler verbessern die Anhaftung der Kunststoffmoleküle, insbesondere von Polypropylen an die Naturfasern, wodurch sich ein faserverstärktes Kunststoffmaterial mit verbesserten mechanischen Eigenschaften ergibt.

Zur Herabsenkung der Entflammbarkeit von Naturfasern in Dämmstoffen oder eines faserverstärkten Kunststoffartikels kann das Mittel ein Flammschutzmittel, insbesondere auf der Basis von Bor umfassen.

Zur Verbesserung der Stabilität der Naturfasern, insbesondere von eingefärbten Naturfasern gegenüber UV-Strahlung kann das Mittel zum Ausrüsten einen Lichtstabilisator umfassen. Ein Farbstoff ermöglicht die Färbung der Naturfasern, wobei der Farbstoff besonders gut an den erfindungsgemäßen Naturfasern anhaftet und sich dadurch eine durchgehende Färbung der Naturfasern ergibt.

Die Naturfasern enthaltende Biomasse kann Grasschnitt und/oder Roggengrünschnitt enthalten. Grasschnitt und Roggengrünschnitt ist durch einen besonders geringen Gehalt an Lignin gekennzeichnet. Die Naturfasern dieser Stoffe bestehen vorwiegend aus Alpha- und Hemizellulose. Diese durch das erfindungsgemäß Verfahren hergestellten Naturfasern liegen in einer besonders hohen Reinheit vor, so dass diese Naturfasern, mit einem Haftvermittler versehen, als Faserverstärkung in Kunststoffen zu einer signifikanten Verbesserung der mechanischen Eigenschaften des Kunststoffs führen. Dies ist insofern überraschend, als dass die vorwiegend aus Hartfasern bestehenden Grasfasern und Roggenfasern eine geringere Festigkeit erwarten ließen als beispielsweise auf Bastfasern basierende Hanffasern. In Versuchen hat sich jedoch überraschenderweise gezeigt, dass die Zugfestigkeit eines mit Gras- oder Roggenfasern verstärkten Probekörpers aus thermoplastischem Kunststoffs besser ist als die eines mit Hanffasern verstärkten Probekörpers aus thermoplastischem Kunststoff.

Ein faserverstärktes Kunststoffmaterial umfasst einen Kunststoff, insbesondere einen thermoplastischen Kunststoff und Naturfasern erhältlich nach dem erfindungsgemäßen Verfahren. Wie zuvor beschrieben weist ein derartig mit Naturfasern faserverstärkter Kunststoff überraschend gute mechanische Eigenschaften auf. Ferner kann das mit den Naturfasern versehene Kunststoffmaterial auf herkömmlichen Anlagen zur Kunststoffverarbeitung verarbeitet werden, insbesondere kann das mit den Naturfasern versehene Kunststoffmaterial in herkömmlichen Spritzgieß- und Extrusionsanlagen verarbeitet werden.

Ein Dämmmaterial umfasst Naturfasern erhältlich nach dem erfindungsgemäßen Verfahren. Ein derartiges Dämmmaterial besteht aus natürlichen und biologisch abbaubaren Rohstoffen, wobei die Entflammbarkeit durch Zusatz eines Flammschutzmittels reduziert ist.

Die mit dem erfindungsgemäßen Verfahren hergestellten Naturfasern finden ferner vorteilhafte Verwendung als Zuschlag für Baustoffe, als Materialien für Garten- und Landschaftsbau und als Verpackungsmaterial.

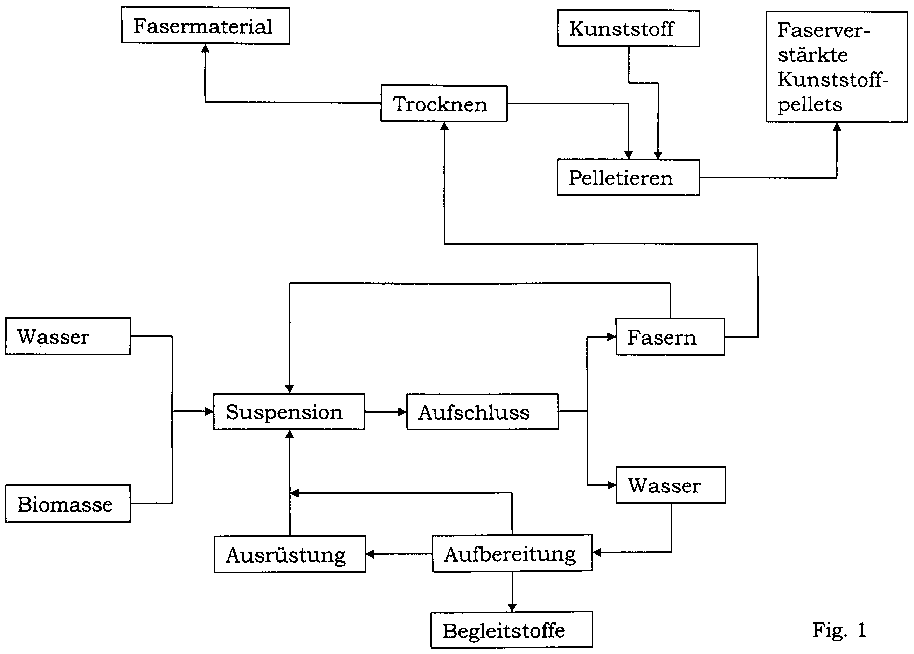

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und / oder bildlich dargestellten Merkmale für sich oder in beliebiger Kombination den Gegenstand der Erfindung, unabhängig von der Zusammenfassung in einzelnen Ansprüchen oder deren Rückbeziehung.

Die Figur illustriert schematisch ein Verfahren zur Bereitstellung und Aufbereitung von Naturfasern.

In Schritt 1 wird eine Naturfasern enthaltende Biomasse bereitgestellt. Hierbei kann es sich um Naturfasern enthaltende Pflanzenteile von verschiedenen Pflanzen handeln. Besonders geeignet für das beschriebene Verfahren sind Pflanzenteile, welche nicht verholzt sind und daher nur geringe Mengen oder kein Lignin enthalten. Vorteilhaft sind weiterhin Pflanzenteile, die in nur geringem Maß oder gar nicht verhornt sind. Eine Verhornung wird bei Pflanzenfasern in der Regel durch eine Trocknung ausgelöst. Daher wird vorgeschlagen, solche Pflanzenteile zu verwenden, die nicht getrocknet wurden. Für das erfindungsgemäße Verfahren eignen sich frisch geschnittenes Gras oder siliertes Gras besonders. Auf diese Weise eine Biomasse bereitgestellt, dessen Trockensubstanzgehalt zwischen 25 und 40 Gew.% liegt. Trockensubstanzgehalt bezeichnet dabei den Gehalt an trockener Substanz, der zurückbleibt, wenn sämtliches Wasser entfernt wird. Ein Gehalt an Trockensubstanz von 25 bis 40 Gew.% entspricht daher einem Wassergehalt zwischen 75 und 60 Gew.%. Die Silierung hat den Vorteil, dass das nur zu bestimmten Jahreszeiten zur Verfügung stehende Gras über das ganze Jahr ohne Qualitätsverlust verarbeitet werden kann. Ein weiterer geeigneter Stoff ist Roggengrünschnitt, wobei auch je nach Region verfügbare andere nachwachsende faserhaltige Rohstoffe eingesetzt werden können.

In Schritt 2 wird durch Zugabe von Wasser eine die Biomasse enthaltene Suspension hergestellt. Dazu wird die Biomasse in einen Mischtank gegeben, Wasser hinzugegeben und mittels einem in dem Mischtank angeordneten Rührwerk mit Wasser in Suspension gebracht. In diesem Schritt erfolgt auch eine erste Reinigung der Biomasse, wobei an der Biomasse anhaftende Verunreinigungen und unerwünschte Begleitstoffe in dem Wasser gelöst werden.

In Schritt 3 werden die Naturfasern aus der Biomasse herausgelöst. Zum Herauslösen wird ein Mazerator eingesetzt, welcher die dem Mazerator zugeführte suspendierte Biomasse in einzelne Bestandteile auftrennt und aufgrund der erzeugten Friktion die mit Zellflüssigkeit gefüllten Zellen öffnet und den Zellsaft austreten lässt. Dazu weist ein Mazerator ein rotierendes Schneidmesser auf, welches berührungslos an einem als Sieb ausgebildeten Gegenmesser entlangstreift. Das Ergebnis der Mazeration ist eine Suspension, in der die in der Biomasse enthaltenen Naturfasern vereinzelt sind und die in der Biomasse enthaltenen flüssigen Bestandteile in der wässrigen Suspension in Lösung gehen.

Die vereinzelten Naturfasern bestehen im Wesentlichen aus Alpha-Zellulose und Hemi-Zellulose, wobei die Naturfasern 25 Gew.% Alpha-Zellulose und 15 Gew.% Hemi-Zellulose enthalten.

In Schritt 4 erfolgt eine Abtrennung der Flüssigkeit aus der Suspension. Dazu wird die Suspension einer Schneckenpresse zugeführt. In der Schneckenpresse erfolgt eine Abtrennung des Wassers mit den in dem Wasser gelösten Bestandteilen wie Zellwasser, Kohlenhydraten, Proteinen und Verunreinigungen von den in der Biomasse enthaltenen Naturfasern.

Die zuvor beschriebenen Schritte 2) bis 4) werden zweimal wiederholt. Dabei wird zur Herstellung der Suspension jeweils aufgereinigtes Wasser verwendet, was bedeutet, dass Wasser ohne die zuvor gelösten Bestandteile bereitgestellt wird. Durch die Wiederholung der Schritte 2 bis 4, welche auch als Aufreinigungsprozess bezeichnet werden, ergibt sich eine besonders hohe Reinheit der Naturfasern. Bei der letztmaligen, also zweiten Wiederholung der Schritte 2) bis 4) wird dem aufgereinigten Wasser ein Mittel zum Ausrüsten der Naturfasern zugemischt. Dieses Mittel ist dann in der wässrigen Suspension gelöst und lagert sich an den Naturfasern in der Nassphase an.

Die Reinheit der Naturfasern wird durch einen Färbetest nachgewiesen. Dazu wird zunächst 0,5 g Direktfarbstoff in Wasser mit einer Temperatur von 40°C gelöst. Anschließend wird der Lösung 2 g Glaubersalz (NaSO₄) zugemischt und die Lösung wird auf 60°C erhitzt. Anschließend werden Naturfasern beigegeben, welche nach der ersten Trocknung entnommen sind und einen Gehalt an Trockensubstanz von 60 bis 65 Gew.% aufweisen. Das so entstandene Gemisch wird unter Rühren auf 70°C erhitzt und unter Rühren 30 min. auf 70°C gehalten. Anschließend werden die Naturfasern mit einer Handpresse abgepresst, mehrfach mit Wasser gespült und an der Luft getrocknet. Die Analyse der Naturfasern erfolgt mittels eines Mikroskops. Verwendete Farbstoffe sind Columbiaechtschwarz BV 150% der CBW Chemie GmbH Wolfen, Solaminlichtgelb 5G 167% der CBW Chemie GmbH Wolfen, Solaminlichtscharlach FB 200% der CBW Chemie GmbH Wolfen, DyStar Remazol Yellow RR Gran der DyStar Colours Distribution GmbH Frankfurt am Main, DyStar Levafix Brilliant Red CA der DyStar Colours Distribution GmbH Frankfurt am Main sowie DyStar Remazol Red CA Gran der DyStar Colours Distribution GmbH Frankfurt am Main. Die mit dem Mikroskop untersuchten Naturfasern sind gekennzeichnet durch eine nahezu durchgängige Färbung, es sind nur geringe Fehlstellen vorhanden. Ausgehend von der durch das Mikroskop sichtbaren Fläche einer Naturfaser beträgt der Flächenanteil der Fehlstellen einer Naturfaser höchstens 5%.

Das Mittel zum Ausrüsten enthält zur besseren Verbindbarkeit mit thermoplastischen Kunststoffen einen Haftvermittler auf der Basis eines mit Maleinsäureanhydrid carboxylierten Polypropylens. Zur Herabsenkung der Entflammbarkeit der Naturfasern enthält das Mittel ferner ein Flammschutzmittel basierend auf Bor. Falls eine Verwendung der Naturfasern in UV-Licht ausgesetzten Bereichen vorgesehen ist, kann das Mittel zusätzlich mit einem Lichtstabilisator versehen sein und ein Farbstoff ermöglicht die durchgehende Färbung der Naturfasern.

In Schritt 5 erfolgt eine Trocknung der Naturfasern. Bei dem erfindungsgemäßen Verfahren ist dies die erste Trocknung der Naturfasern, welche bis zu diesem Zeitpunkt stets feucht gehalten wurden. Zur Vermeidung der Verhornung wird die Trocknung derart durchgeführt, dass die Naturfasern nach Abschluss der Trocknung einen Gehalt an Trockensubstanz von 88 bis 92 Gew.%, höchstens von 95 Gew.% aufweisen.

Die Trocknung erfolgt in einem zweistufigen Verfahren. In einer ersten Stufe erfolgt eine Trocknung in einem Bandtrockner bei Warmlufttemperaturen von 60 bis 80°C und einer Verweilzeit der Naturfasern in dem Bandtrockner von 25 bis 35 min. Damit die Naturfasern dennoch eine gleichmäßige Restfeuchte aufweisen, ist der Bandtrockner so ausgestaltet, dass nur ein Teil der getrockneten Naturfasern entnommen wird, während der übrige Teil dem Bandtrockner für eine wiederholte Trocknung wieder zugeführt wird. Dazu wird der Teil der Naturfasern zurückgeführt, der während der Trocknung dem Luftstrom abgewandt war und dadurch die größte Restfeuchte aufweist. Dementsprechend wird lediglich der Teil der Naturfasern entnommen, der eine gleichmäßig geringe Restfeuchte aufweist. Die Trocknungsparameter während der Trocknung in der ersten Stufe sind dabei so eingestellt, dass die Naturfasern nach der ersten Trocknung eine Restfeuchte von 30 bis 40 Gew.%, höchstens von 50 Gew.% aufweisen.

In einer zweiten Stufe werden die Naturfasern in einen Luftstrom aus erhitzter Luft gegeben und im Gleichstrom mit der erhitzten Luft geführt, wobei die Naturfasern Feuchtigkeit an die im Gleichstrom geführte Luft abgeben. Für diese Trocknung wird ein Flugschichttrockner eingesetzt. In diesem Trockner werden die Naturfasern in dem Luftstrom mitgerissen und in kurzer Zeit getrocknet. Die Lufttemperatur des erhitzten Luftstroms beträgt vorzugsweise zwischen 75°C und 110°C und die Verweilzeit der Naturfasern in der Vorrichtung beträgt vorzugsweise zwischen 0,5 s und 3 s erfolgen. Dazu wird der Luftstrom mittels eines Gebläses auf eine Geschwindigkeit von 1 m/s bis 6 m/s beschleunigt.

Die Trocknungsparameter während der Trocknung in der zweiten Stufe sind dabei so eingestellt, dass die Naturfasern nach der zweiten Trocknung einen Gehalt an Trockensubstanz von 88 bis 92 Gew.%, höchstens von 95 Gew.% aufweisen. Nach erfolgter Trocknung werden die Naturfasern von der Luft abgetrennt, dies kann beispielsweise durch einen Zyklon erfolgen. Die so getrockneten Naturfasern sind lagerfähig, unempfindlich gegenüber Schimmel und weisen nur einen geringen Grad an Verhornung auf.

Die nach der zweiten Trocknung entnommenen Naturfasern weisen eine Bauschigkeit von 41 kg/m³ auf. Die Bauschigkeit wird durch ein Schüttgewicht quantifiziert, wobei ein Behälter mit einem Volumen von 0,25 m³ mit den Naturfasern gefüllt und an der Oberkante abgestrichen wird, anschließend wird die Masse der in den Behälter eingefüllten Naturfasern bestimmt. Eine erfindungsgemäße Bauschigkeit der Naturfasern beträgt zwischen 30 kg/m³ und 50 kg/m³, vorzugsweise zwischen 35 und 60 kg/m³.
Die mit dem zuvor beschriebenen Verfahren hergestellten Naturfasern werden anschließend verpackt und der weiteren Verwendung zugeführt.

Zur Verwendung als Dämmstoff können die Naturfasern entweder zu Dämmplatten geformt werden oder direkt als Einblasdämmstoff in ein Bauwerk eingebracht werden.

Zur Verwendung als Faserverstärkung für ein Kunststoffmaterial werden die Naturfasern mit Granulat eines Kunststoffs vermischt, wobei das Granulat aufgrund der großen Bauschigkeit in den Poren der Naturfasermatrix verteilt ist. Anschließend werden die mit dem Granulat versehenen Naturfasern einer Vorrichtung zur Agglomeration, hier einem Extruder zugeführt. In dem Extruder werden die mit dem Granulat versehenen Naturfasern komprimiert und erhitzt. Dabei tritt der Rest der in den Naturfasern enthaltenen Feuchtigkeit aus und entweicht aus dem Extruder als Dampf. Durch die Erwärmung der Naturfasern und die Entfernung der Restmengen von Wasser erfolgt eine Aktivierung des Haftvermittlers der durch den direkten Kontakt sowohl mit den Naturfasern als auch mit dem Kunststoff eine fest Bindung mit beiden Stoffen eingeht, so dass die Naturfasern fest in den Kunststoff eingebunden sind. Ferner schmilzt der Kunststoff, wobei die Naturfasern durch die in dem Extruder angeordnete Schnecke gleichmäßig in dem aufgeschmolzenen Kunststoff verteilt werden. Nach dem Aufschmelzen wird das Gemisch aus Naturfasern und Kunststoff durch ein Sieb gepresst an welchem ein Schneidmesser entlang streift. Auf diese Weise bilden sich Pellets eines faserverstärkten Kunststoffmaterials.

Als Ausgangsmaterial des Kunststoffs wird ein thermoplastischer Kunststoff, insbesondere Polypropylen oder Polyethylen eingesetzt, wobei die beiden vorgenannten Kunststoffe auch als Recyclingmaterial ausgebildet sein können.

Die so hergestellten Pellets können mit herkömmlichen Anlagen zur Kunststoffverarbeitung verarbeitet werden, insbesondere können die Pellets in herkömmlichen Spritzgieß- und Extrusionsanlagen verarbeitet werden. Zur Herstellung eines Kunststoffartikels aus faserverstärktem Kunststoff werden die Pellets einer Spritzgieß- oder Extrusionsanlage zugeführt und dort zu Artikeln geformt.

Ein Probekörper bestehend aus einem faserverstärkten Kunststoff, enthaltend 50 Gew.% der erfindungsgemäßen Naturfasern und 50 Gew.% Polypropylen erzielt folgende Werte:

| | |
|---|---|
| Dichte | 0,82 g/cm³ |
| Zugfestigkeit (ISO 527) | 32 MPa |
| Zug-E-Modul (ISO 527) | 4.000 Mpa |
| Charpy-Schlagzähigkeit (ISO 179) | 11 kJ/m² |

Der Schmelzflussindex, als die Kennzahl für das Fließverhalten eines thermoplastischen Werkstoffs, ist im Vergleich zu einem reinen Polypropylen um lediglich 20% erniedrigt. Dies deutet auf eine ähnliche gute Verarbeitbarkeit des faserverstärkten Kunststoffs verglichen zu einem reinen Kunststoff hin. Jedoch verbessern sich die Festigkeitswerte gegenüber reinem Polypropylen signifikant. Sowohl der Zug-E-Modul als auch die Schlagzähigkeit des faserverstärkten Kunststoffs sind wesentlich besser als die Vergleichswerte eines reinen Polypropylens. Die Werte für reines Polypropylen als Neuware betragen:

| | |
|---|---|
| Dichte | 0,9 g/cm³ |
| Zugfestigkeit (ISO 527) | 26 MPa |
| Zug-E-Modul (ISO 527) | 1.450 Mpa |
| Charpy-Schlagzähigkeit (ISO 179) | 5 kJ/m² |

Bezogen auf die Dichte sind die Festigkeitswerte des faserverstärkten Kunststoffs gegenüber reinem Kunststoff deutlich verbessert, so dass aufgrund der besseren Festigkeit eine weitere Gewichtsreduktion und damit Materialeinsparung möglich ist. Somit kann beispielsweise die Wandstärke eines Kunststoffartikels reduziert werden.

Ferner wurde überraschenderweise festgestellt, dass ein Probekörper, welcher aus zermahlenem, also wiederaufbereitetem faserverstärkten Kunststoff der zuvor beschriebenen Art besteht, eine Zugfestigkeit aufweist, die ebenfalls 32 MPa beträgt und sich somit vergleichbar zu einem nicht-aufbereiteten Probekörper verhält. Somit zeigt sich, dass das erfindungsgemäße faserverstärkte Kunststoffmaterial besonders gut für das Recycling geeignet ist.

## Patentansprüche

1. Verfahren zur Bereitstellung und Aufbereitung von Naturfasern, wobei das Verfahren folgende Schritte umfasst:
1) Bereitstellen einer Naturfasern enthaltenden Biomasse mit einer Trockensubstanz von höchstens 50 Gew.%;
2) Zugeben von Wasser zum Herstellen einer die Biomasse enthaltenden Suspension;
3) Herauslösen der Naturfasern aus der Biomasse;
4) Abtrennen der Flüssigkeit aus der Suspension;
5) Trocknen der Naturfasern;
wobei die Trocknung der Naturfasern eine Vortrocknung und eine Endtrocknung umfasst, **dadurch gekennzeichnet, dass** die Vortrocknung eine Trocknung in einem Bandtrockner umfasst und dass nur ein Teil der getrockneten Naturfasern aus dem Bandtrockner entnommen wird, während der übrige Teil dem Bandtrockner wieder zugeführt wird.

2. Verfahren nach Anspruch 1, **dadurch gekennzeichnet**, die Endtrocknung eine Trocknung in einem Luftstrom umfasst.

3. Verfahren nach Anspruch 2, **dadurch gekennzeichnet, dass** die Endtrocknung in einem Flugschichttrockner erfolgt.

4. Verfahren nach einem der Ansprüche 1 bis 3, **dadurch gekennzeichnet, dass** die Naturfasern nach der Trocknung einen Gehalt an Trockensubstanz von 88 bis 92 Gew.%, höchstens von 95 Gew.% aufweisen.

5. Verfahren nach einem der Ansprüche 1 bis 4, **dadurch gekennzeichnet, dass** die Fasern bis zum Trocknen einen Gehalt an Trockensubstanz von 90% nicht überschreiten, insbesondere einen Gehalt an Trockensubstanz von 60% nicht überschreiten.

6. Verfahren nach einem der Ansprüche 1 bis 5, **dadurch gekennzeichnet, dass** die Schritte 2) bis 4) wenigstens einmal wiederholt werden, wobei bei der letztmaligen Wiederholung der Schritte 2) bis 4) die Suspension wenigstens ein Mittel zum Ausrüsten der Fasern enthält;

7. Verfahren nach Anspruch 6, **dadurch gekennzeichnet, dass** die Mittel zum Ausrüsten einen Haftvermittler, ein Flammschutzmittel, Lichtstabilisatoren und/oder einen Farbstoff umfassen.

8. Verfahren nach Anspruch 7, **dadurch gekennzeichnet, dass** der Haftvermittler ein carboxyliertes Polypropylen umfasst.

9. Verfahren nach Anspruch 8, **dadurch gekennzeichnet, dass** die Carboxylierung durch Maleinsäureanhydrid erfolgt.

10. Verfahren nach einem der Ansprüche 1 bis 9, **dadurch gekennzeichnet, dass** die Fasern enthaltende Biomasse Grasschnitt und/oder Roggengrünschnitt enthält.

## Claims

1. Method for providing and preparing natural fibers, the method comprising the following steps:
1) providing a biomass containing natural fibers and having a dry matter content of at most 50 % by weight;
2) adding water to produce a suspension containing the biomass;
3) dissolving the natural fibers out of the biomass;
4) separating the liquid out from the suspension;
5) drying the natural fibers;
wherein the drying of the natural fibers comprises pre-drying and post-drying, **characterized in that** the pre-drying comprises drying in a belt dryer and **in that** only part of the dried natural fibers is removed from the belt dryer while the remaining part is supplied back to the belt dryer.

2. Method according to claim 1, **characterized in that** the post-drying comprises drying in an airflow.

3. Method according to claim 2, **characterized in that** the post-drying takes place in a dispersion dryer.

4. Method according to any of claims 1 to 3, **characterized in that** the natural fibers have a dry matter content of 88 % to 92 % by weight, at most 95 % by weight, after the drying.

5. Method according to any of claims 1 to 4, **characterized in that** the fibers do not exceed a dry matter content of 90 %, in particular do not exceed a dry matter content of 60 %, until drying.

6. Method according to any of claims 1 to 5, **characterized in that** steps 2) to 4) are repeated at least once, wherein during the last repetition of steps 2) to 4) the suspension contains at least one medium for finishing the fibers.

7. Method according to claim 6, **characterized in that** the finishing media comprise an adhesion promoter, a flame retardant, light stabilizers and/or a dye.

8. Method according to claim 7, **characterized in that** the adhesion promoter comprises a carboxylated polypropylene.

9. Method according to claim 8, **characterized in that** the carboxylation is carried out using maleic anhydride.

10. Method according to any of claims 1 to 9, **characterized in that** the biomass containing the fibers contains grass cuttings and/or green rye cuttings.

## Revendications

1. Procédé d'obtention et de préparation de fibres naturelles, le procédé comprenant les étapes suivantes:
1) l'obtention d'une biomasse contenant des fibres naturelles avec une substance sèche d'au plus 50 % en poids;
2) l'ajout d'eau pour la fabrication d'une suspension contenant la biomasse;
3) l'extraction des fibres naturelles à partir de la biomasse;
4) la séparation du liquide à partir de la suspension;
5) le séchage des fibres naturelles;
dans lequel le séchage des fibres naturelles comprend un séchage préalable et un séchage final, **caractérisé en ce que** le séchage préalable comprend un séchage sur un séchoir à bande et qu'uniquement une partie des fibres naturelles séchées est prélevée dans le séchoir à bande, tandis que la partie restante est de nouveau réintroduite dans le séchoir à bande.

2. Procédé selon la revendication 1, **caractérisé en ce que** le séchage final comprend un séchage dans un courant d'air.

3. Procédé selon la revendication 2, **caractérisé en ce que** le séchage final a lieu dans un séchoir à lit pulsé.

4. Procédé selon l'une des revendications 1 à 3, **caractérisé en ce que** les fibres naturelles présentent après le séchage une teneur en substance sèche de 88 % à 92 % en poids, de 95 % en poids au plus.

5. Procédé selon l'une des revendications 1 à 4, **caractérisé en ce que** les fibres jusqu'au séchage ne dépassent pas une teneur en substance sèche de 90 %, notamment, ne dépassent pas une teneur en substance sèche de 60 %.

6. Procédé selon l'une des revendications 1 à 5, **caractérisé en ce que** les étapes 2) à 4) sont répétées au moins une fois, dans lequel, lors de la dernière répétition des étapes 2) à 4), la suspension contient au moins un produit pour le renforcement des fibres.

7. Procédé selon la revendication 6, **caractérisé en ce que** les produits pour le renforcement comprennent un promoteur d'adhésion, un produit ignifuge, des stabilisants de la lumière et/ou un colorant.

8. Procédé selon la revendication 7, **caractérisé en ce que** le promoteur d'adhésion comprend un polypropylène carboxylé.

9. Procédé selon la revendication 8, **caractérisé en ce que** la carboxylation est effectuée par de l'anhydride d'acide maléique.

10. Procédé selon l'une des revendications 1 à 9, **caractérisé en ce que** la biomasse contenant les fibres contient de la tonte d'herbe et/ou de la tonte de seigle vert.
